# EUROPÄISCHE PATENTANMELDUNG

(11) **EP 1 796 016 A2**
(43) Veröffentlichungstag der Anmeldung: **13.06.2007**
(21) Anmeldenummer: 06123552.9
(22) Anmeldetag: 06.11.2006
(51) Int. Cl.: G06K 7/00

(54) **Rauscharme Sendevorrichtung mit hohem Wirkungsgrad und variabler Sendeleistung für eine Schreib-/Lesestation eines RFID-Systems**

(30) Priorität: 09.12.2005 DE 102005059348
(71) Anmelder: Feig Electronic GmbH, 35781 Weilburg-Waldhausen (DE)
(72) Erfinder: Bernard, Ludger, 65606, Villmar (DE); Reichwein, Elmar, 65599, Dornburg (DE)
(74) Vertreter: Knefel, Cordula

(57) **Zusammenfassung**

Die Erfindung betrifft eine rauscharme Sendevorrichtung mit hohem Wirkungsgrad und variabler Sendeleistung für eine Schreib-/Lesestation eines RFID-Systems bestehend aus einer Sendeendstufe, die als E-Endstufe aufgebaut ist, und einer Ansteuervorrichtung der Sendeendstufe, bei der
- eine Sendeleistung der Sendeendstufe durch Variieren einer Senderversorgungsspannung variierbar ist und/oder
- ein Modulationsgrad eines Sendesignals durch Variieren einer Versorgungsspannung variierbar ist.

## Beschreibung

Die Erfindung betrifft eine Sendevorrichtung mit hohem Wirkungsgrad und variabler Sendeleistung für eine Schreib-/Lesestation eines RFID-Systems.

Diese Sendevorrichtung dient zur Kommunikation mit passiven RFID-Transpondern über möglichst große Entfernungen, beispielsweise im Bereich von bis zu zwei Metern.

Die Sendevorrichtung einer Schreib-/Lesestation hat die Aufgabe, die elektrische Leistung zur Verfügung zu stellen, die über die an die Schreib-/Lesestation angeschlossene Antenne, die eine kombinierte Sende-/Empfangsantenne ist, abgegeben werden soll. Das von der Sendevorrichtung erzeugte elektrische Signal ist dabei eine Wechselspannung oder ein Wechselstrom mit einer Frequenz von beispielsweise 125 kHz oder 13,56 MHz oder einer anderen Frequenz. Das abgegebene elektrische Signal dient gleichzeitig dazu, den oder die passiven Transponder innerhalb des Antennenfeldes berührungslos mit elektrischer Energie zu versorgen, und es dient als Trägerfrequenz für die bidirektionale Datenübertragung zwischen Transponder und Schreib-/Lesestation. Zur Datenübertragung von der Schreib-/Lesestation zu dem oder den Transpondern wird die Trägerfrequenz mit den zu sendenden Daten in ihrer Amplitude moduliert, wobei der Grad der Modulation in Abhängigkeit der Transponiertechnologie oder der Anwendung unterschiedlich groß sein kann und beispielsweise im internationalen Standard ISO/IEC 15693 wahlweise mit einem Grad von 100 % oder einem Grad von 10 % bis 30 % angegeben ist.

Die Datenübertragung zwischen Schreib-/Lesestation und Transponder erfolgt hierbei im Halbduplex-Verfahren. Dies bedeutet, dass die Schreib-/Lesestation und der oder die Transponder dieselbe Übertragungsstrecke zur Datenübertragung nutzen, und dass die Datenübertragung von der Schreib-/Lesestation zu dem oder den Transpondern nicht gleichzeitig mit einer Datenübertragung von einem Transponder zur Schreib-/Lesestation stattfinden kann.

Damit die Schreib-/Lesestation eines RFID-Systems die Rückantwort eines weit entfernten Transponders sicher empfangen kann, muss der Empfänger der Schreib-/Lesestation eine sehr hohe Empfindlichkeit aufweisen und in der Lage sein, noch sehr schwache Signale als Rückantwort eines Transponders zu erkennen.

Bei anderen üblichen Funksystemen wird auf eine Trägerfrequenz die zu übertragende Information aufmoduliert. Die durch die Information modulierte Trägerfrequenz wird von einem Sender ausgesendet. Ein Empfänger, der meist weit von dem Sender entfernt ist, empfängt die mit der Information modulierte Trägerfrequenz und demoduliert daraus wieder die Information. Entscheidend ist hierbei, dass der Empfänger eine Empfindlichkeit aufweist, die es ermöglicht, die modulierte Information aus dem empfangenen Signal zu demodulieren. Die Signalstärke der empfangenen Trägerfrequenz ist dabei meist ähnlich groß wie die Signalstärke der aufmodulierten Informationen.

Das Sender-/Empfänger-System einer Schreib-/Lesestation eines RFID-Systems weist gegenüber anderen Funksystemen einen deutlichen Unterschied auf, da der Sender und Empfänger eine gerätetechnische Einheit bilden und der Sender eine hohe Energie aussenden muss, um die passiven Transponder in einem entsprechend großen Abstand von der Schreib-/Lesestation mit elektrischer Energie versorgen zu können, die Transponder bei ihrer Rückantwort aber nur ein verhältnismäßig schwaches Signal auf die von der Schreib-/Lesestation ausgesendete Trägerfrequenz aufmodulieren können. Um dieses schwache Rückantwortsignal empfangen zu können, benötigt der Empfänger der Schreib-/Lesestation eine sehr hohe Empfindlichkeit. Gleichzeitig empfängt der Empfänger jedoch auch das verhältnismäßig starke Sendesignal der Schreib-/Lesestation, welches mit hoher Energie in dem Empfänger einwirkt.

Dadurch, dass die Schreib-/Lesestation ihr eigenes Sendesignal mit hoher Signalstärke empfängt, kann das schaltungs-, bauteil- und temperaturbedingte Rauschen des Senders eine so hohe Amplitude aufweisen, dass das schwache Rückantwortsignal eines Transponders vom Rauschen des Senders überdeckt wird, so dass der Empfänger der Schreib-/Lesestation keine Transponder-Rückantwortdaten mehr demodulieren kann.

Wie bereits beschrieben, benötigt eine Schreib-/Lesestation zur Kommunikation mit einem Transponder über größere Reichweiten einen Sender mit hoher Leistung. Typischerweise besitzt ein solcher Sender eine Sendeleistung von mehr als einem Watt. Die Sendeleistung wird in der Sendeendstufe des Senders erzeugt, die aus wenigstens einem Transistor aufgebaut ist. Abhängig vom Wirkungsgrad der Sendeendstufe und der Sendeleistung entsteht in der Sendeendstufe Verlustleistung in Form von Wärme. Der Wirkungsgrad gibt hierbei das Verhältnis der zugeführten elektrischen Leistung zur abgegebenen Sendeleistung an. Je schlechter der Wirkungsgrad der Sendeendstufe ist, umso mehr Verlustleistung muss in Form von Wärme abgeführt werden, was aufwändige und teure Maßnahmen zur Kühlung notwendig macht. Ferner muss bei einem schlechten Wirkungsgrad mehr elektrische Energie zugeführt werden, was wiederum mit einem erhöhten Bauteil- und Energieaufwand verbunden ist.

Eine weitere Anforderung an eine Schreib-/Lesestation ist, dass ihre Sendeleistung variiert werden kann. Eine Anpassung der Sendeleistung ist beispielsweise notwendig, um den Betrieb einer Schreib-/Lesestation unter national unterschiedlichen, gesetzlich vorgeschriebenen Grenzwerten oder die Kombination mit unterschiedlich großen Antennen zu ermöglichen. Ferner kann es beispielsweise notwendig sein, die Reichweite einer Schreib-/Lesestation zu limitieren, damit sie eine benachbarte Schreib-/Lesestation nicht stört.

Auch hier ist es vorteilhaft, wenn die Einstellung der Sendeleistung keinen Einfluss auf den Wirkungsgrad des Senders der Schreib-/Lesestation hat.

Ferner sollte eine Schreib-/Lesestation in der Lage sein, den Modulationsgrad, also das Verhältnis der unmodulierten Amplitude zur modulierten Amplitude des Sendesignals zu variieren, damit sie an die Erfordernisse unterschiedlicher Transponder-Technologien ohne Änderungen der Hardware angepasst werden kann.

Um einen guten Wirkungsgrad der Sendeendstufe einer Schreib-/Lesestation zu erzielen, bietet sich der Einsatz einer so genannten E-Endstufe an, wie sie beispielsweise in der US 3,919,656 A beschrieben und auch bereits gemäß US 6,737,973 B2 als Stand der Technik in Schreib-/Lesestationen eines RFID-Systems bekannt sind.

Die zum Stand der Technik (US 6,737,973 B2) gehörende Sendevorrichtung der in dieser Druckschrift beschriebenen Schreib-/Lesestation hat jedoch den Nachteil, dass der Modulationsgrad nicht frei gewählt werden kann, da er über die Dimensionierung und Anordnung der verwendeten Bauteile fest vorgegeben ist. Ferner ist für jeden weiteren gewünschten Modulationsgrad ein weiterer Transistor, ein weiterer Widerstand und eine weitere Ansteuerung des Transistors notwendig. Ein Modulationsgrad von 100 % wird in dieser Druckschrift beispielsweise über den Transistor (39) erzielt, während mit dem Transistor (60) und dem Widerstand (58) ein Modulationsgrad von 10 % generiert werden kann. Um beispielsweise zusätzlich einen Modulationsgrad von 20 % generieren zu können, müsste parallel zu dem Transistor (60) und dem Widerstand (58) eine weitere zusätzliche Parallelschaltung aus Transistor und Widerstand angeordnet werden. Ferner ist es in dieser Druckschrift nicht vorgesehen, die Sendeleistung der Sendevorrichtung variabel zu gestalten.

Davon ausgehend liegt der Erfindung das technische Problem zugrunde, eine besonders rauscharme Sendevorrichtung mit hohem Wirkungsgrad und variabler Sendeleistung und variablem Modulationsgrad für eine Schreib-/Lesestation eines RFID-Systems anzugeben.

Gelöst wird dieses Problem durch eine rauscharme Sendevorrichtung mit hohem Wirkungsgrad und variabler Sendeleistung für eine Schreib-/Lesestation eines RFID-Systems bestehend aus einer Sendeendstufe, die als E-Endstufe aufgebaut ist, und einer Ansteuervorrichtung der Sendeendstufe, bei der
- eine Sendeleistung der Sendeendstufe durch Variieren einer Senderversorgungsspannung variierbar ist und/oder
- ein Modulationsgrad eines Sendesignals durch Variieren einer Versorgungsspannung variierbar ist.

Die erfindungsgemäße Sendevorrichtung hat den Vorteil, dass sie aus sehr wenigen Komponenten aufgebaut ist, und dass sie damit sehr preiswert ist.

Vorteilhaft ist bei der erfindungsgemäßen Sendevorrichtung eine Modulation durch Modulieren der Senderversorgungsspannung durchführbar. Dies hat den Vorteil, dass sich der Wirkungsgrad der Sendevorrichtung durch die Modulation nicht verschlechtert.

Der Modulationsgrad des Sendesignals ist gemäß einer weiteren vorteilhaften Ausführungsform durch Variieren der Senderversorgungsspannung variierbar. Dies hat ebenfalls den Vorteil, dass sich der Wirkungsgrad der Sendevorrichtung während der Modulation nicht verschlechtert.

Gemäß einer besonders bevorzugten Ausführungsform der Erfindung ist eine Senderversorgungsspannungsquelle als eine von zwei Gleichspannungen gespeiste Senderversorgungsspannungsquelle ausgebildet, wobei die Gleichspannungen einen unterschiedlichen Betrag aufweisen, und wobei die Gleichspannung mit dem höheren Betrag die Amplitude des unmodulierten Sendesignals bestimmt, und die Gleichspannung mit dem geringeren Betrag die Amplitude des modulierten Sendesignals bestimmt und innerhalb der Senderversorgungsspannungsquelle in Abhängigkeit der zu modulierenden Signale eine Umschaltung zwischen den beiden Gleichspannungen durchführbar ist. Diese Ausführungsform ist vorteilhaft, da durch eine relativ einfache Schaltung die Umschaltung zwischen den beiden Gleichspannungen durchführbar ist.

Gemäß einer weiteren vorteilhaften Ausführungsform der Erfindung ist eine Modulation durch Modulieren einer Treiberausgangsspannung durchführbar. Dabei ist vorteilhaft ein Endstufentransistor von einer Treiberausgangsspannung mit variabler Amplitude ansteuerbar, wobei die Amplitude der Treiberausgangsspannung derart variierbar ist, dass zum Senden des unmodulierten Sendesignals der Endstufentransistor vollständig durchsteuerbar ist, während die Treiberausgangsspannung zum Senden des modulierten Sendesignals eine geringere Amplitude aufweist, derart, dass der Endstufentransistor durch die geringere Amplitude nicht mehr vollständig durchgesteuert ist. Der Vorteil liegt hierbei darin, dass die Bauteile, die zur Ansteuerung des Endstufentransistors notwendig sind, nur eine kleine Leistung schalten müssen und preiswert sind.

Vorzugsweise ist die Modulation der Treiberausgangsspannung durch Variieren der Treiberversorgungsspannung oder durch Umschaltung zwischen der Treiberversorgungsspannung und einer Modulationsversorgungsspannung durchführbar. Die Modulation der Treiberausgangsspannung kann auf diese Art und Weise sehr einfach durchgeführt werden.

Vorteilhaft ist der Modulationsgrad durch Variieren der Treiberversorgungsspannung oder durch Variieren der Modulationsversorgungsspannung variierbar. Diese beiden Möglichkeiten bieten den Vorteil, dass die Ansteuerschaltung mit einfachen und preiswerten Bauteilen aufgebaut werden kann.

Gemäß einer weiteren vorteilhaften Ausführungsform der erfindungsgemäßen Sendevorrichtung ist die Senderversorgungsspannung von einem Schaltnetzteil oder mittels eines Schaltreglers erzeugbar. Diese Ausführungsform weist den Vorteil auf, dass die Senderversorgungsspannung damit einfach variiert werden kann, ohne dass der Gesamtwirkungsgrad der Schreib-/Lesestation dadurch negativ beeinflusst wird.

Weitere Merkmale und Vorteile der Erfindung ergeben sich anhand der zugehörigen Zeichnung, in der mehrere Ausführungsbeispiele einer erfindungsgemäßen Sendevorrichtung nur beispielhaft dargestellt sind. In der Zeichnung zeigen:
- Fig. 1: ein Blockschaltbild einer ersten Ausführungsform der erfindungsgemäßen Sendevorrichtung;
- Fig. 2: das Prinzipschaltbild einer Ausführungsform der erfindungsgemäßen Sendeendstufe ohne Tiefpassfilter und Impedanztransformator;
- Fig. 3: einen Signalverlauf des Sendesignals der Sendevorrichtung in Abhängigkeit von der Versorgungsspannung;
- Fig. 4: ein Prinzipschaltbild einer Ausführungsform der Senderversorgungsspannungsquelle für eine variable Senderleistung und einen variablen Modulationsgrad;
- Fig. 5: ein Prinzipschaltbild einer Ausführungsform der erfindungsgemäßen Ansteuervorrichtung;
- Fig. 6: ein Blockschaltbild einer weiteren Ausführungsform der erfindungsgemäßen Sendevorrichtung;
- Fig. 7: einen Signalverlauf des Sendesignals der Sendevorrichtung in Abhängigkeit der Ansteuerspannung bei einem Modulationsgrad von 10 %;
- Fig. 8: einen Signalverlauf des Sendesignals der Sendevorrichtung in Abhängigkeit der Ansteuerspannung bei einem Modulationsgrad von 100 %;
- Fig. 9: ein Blockschaltbild einer zweiten Ausführungsform der erfindungsgemäßen Sendevorrichtung;
- Fig. 10: ein Prinzipschaltbild der weiteren Ausführungsform der erfindungsgemäßen Ansteuervorrichtung.

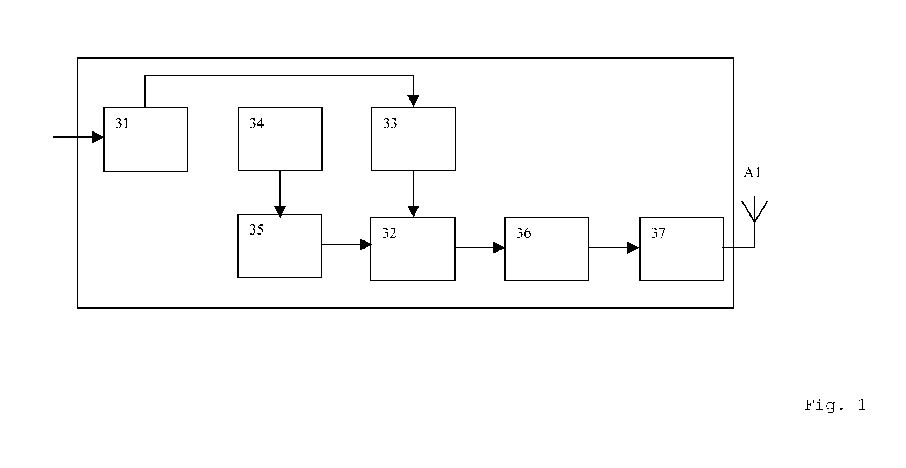

Anhand der in Fig. 1 dargestellten ersten Ausführungsform der erfindungsgemäßen Sendevorrichtung wird das Funktionsprinzip der Sendevorrichtung beschrieben.

In dieser Ausführungsform besteht die Sendevorrichtung aus den Komponenten
- Steuervorrichtung 31, über die die zu sendenden Daten ausgegeben werden und die Sendeleistung einer Sendeendstufe 32 gesteuert wird,
- Sendeendstufe 32, die als E-Endstufe ausgebildet ist,
- Senderversorgungsspannungsquelle 33, die dazu dient, die elektrische Gleichspannung für die Sendeendstufe 32 zur Verfügung zu stellen,
- Treibervorrichtung 35, über die die Sendeendstufe 32 angesteuert wird,
- Treiberversorgungsspannungsquelle 34, über die die Treibervorrichtung 35 mit elektrischer Gleichspannung versorgt wird,
- Impedanztransformator 36 zur Anpassung der Impedanz der Sendeendstufe an die angeschlossene Antenne und
- Tiefpassfilter 37 zur Filterung etwaiger Oberwellen und Frequenzen und unerwünschter Frequenzen.

Die Antenne A1, die eine Sendeantenne oder eine kombinierte Sende-/Empfangsantenne sein kann, ist an das Tiefpassfilter 37 angeschlossen.

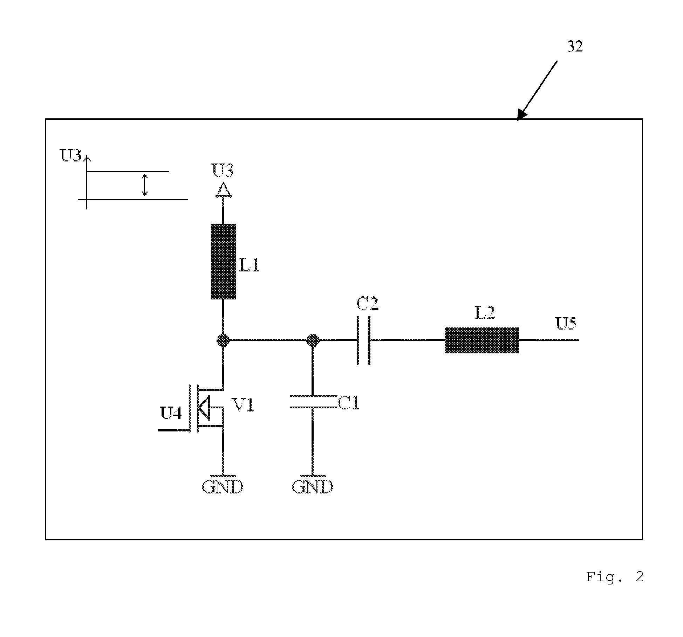

Die Sendeendstufe 32 weist dabei die wesentlichen Merkmale einer so genannten E-Endstufe auf und wird in Fig. 2 detaillierter dargestellt. Der Einsatz einer E-Endstufe in der Sendevorrichtung einer Schreib-/Lesestation ist besonders vorteilhaft, weil sie aus sehr wenigen Komponenten und damit preiswert aufgebaut werden kann und einen hohen Wirkungsgrad besitzt, da ein Endstufentransistor V1 im Schalterbetrieb betrieben wird und weil sie sehr rauscharm ist.

Neben dem Endstufentransistor V1, der als Feld-Effekt-Transistor (FET) oder Bipolartransistor ausgeführt werden kann, besteht die Sendeendstufe 32 aus den Komponenten Induktivität L1 und einem Anpassnetzwerk, bestehend aus den Kapazitäten C1 und C2 und einer Induktivität L2. Über eine Treiberausgangspannung U4 wird der Endstufentransistor V1 angesteuert, wobei die Treiberausgangspannung U4 eine Wechselspannung oder eine gepulste Gleichspannung ist und der Sendevorrichtung die Sendefrequenz der Schreib-/Lesestation von beispielsweise 13,56 MHz aufprägt.

Um die Anforderung nach einer variablen Sendeleistung zu erfüllen, ohne den Wirkungsgrad der Sendevorrichtung negativ zu beeinflussen, ist erfindungsgemäß vorgesehen, die Sendeleistung über die variable Senderversorgungsspannungsquelle 33, die eine Senderversorgungsspannung U3, die eine Gleichspannung ist, abgibt, zu variieren. Der durch die Senderversorgungsspannung U3 hervorgerufene Strom wird der Sendeendstufe 32 über die Induktivität L1 zugeführt. Die Induktivität L1 hat dabei die Funktion, die Senderversorgungsspannung U3 von der hochfrequenten Wechselspannung der Sendeendstufe zu entkoppeln.

Die Amplitude von einem Sendesignal U5 ist dabei abhängig vom Betrag der Senderversorgungsspannung U3. Je höher die Senderversorgungsspannung U3 ist, umso größer ist auch die Amplitude vom Sendesignal U5 und damit die Sendeleistung.

Dadurch, dass erfindungsgemäß vorgesehen ist, die Sendeleistung der Sendevorrichtung durch Variieren der Senderversorgungsspannung U3 einzustellen, wird erreicht, dass der Endstufentransistor V1 bei jeder eingestellten Sendeleistung im Schalterbetrieb arbeitet, wodurch keine negative Beeinflussung des Wirkungsgrads der Sendeendstufe erfolgt.

In einer weiteren Ausführungsform kann die Senderversorgungsspannungsquelle 33 auch so aufgebaut werden, dass sie nicht nur eine statische Gleichspannung als Senderversorgungsspannung U3 abgibt, sondern die Senderversorgungsspannung U3 in dem Maße und für die Zeitdauer dynamisch abgesenkt werden kann, wie dies zum Modulieren von Daten über die Sendevorrichtung notwendig ist.

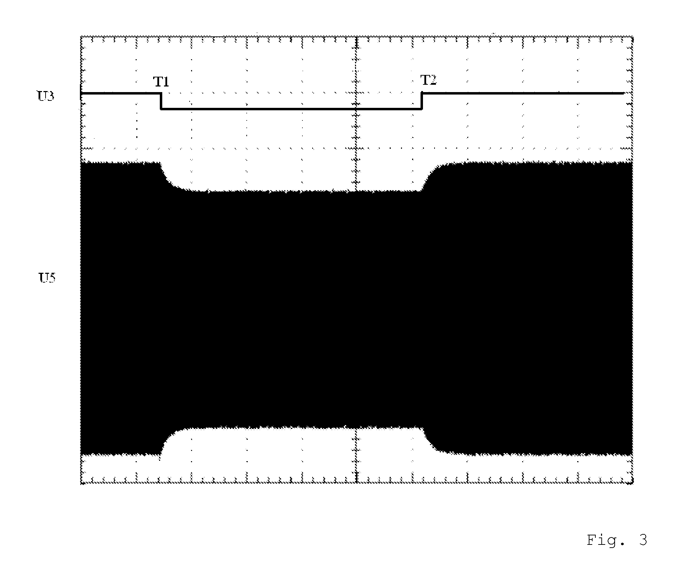

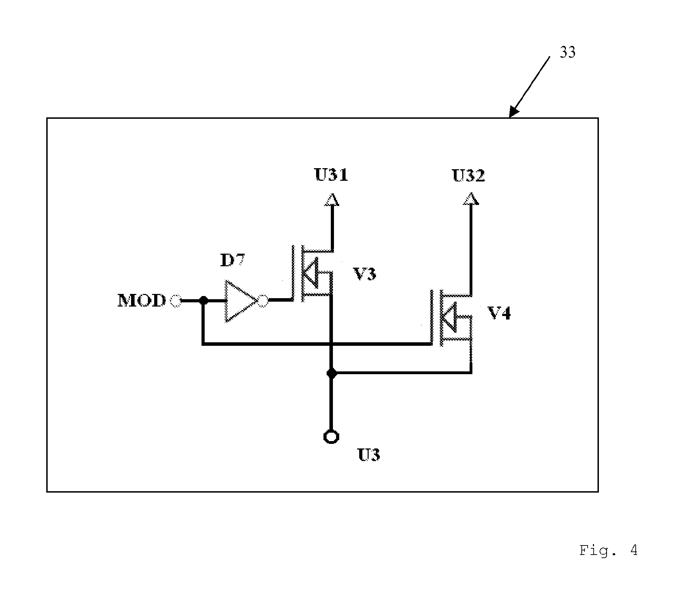

Der Zusammenhang zwischen der Senderversorgungsspannung U3 und dem Sendesignal U5 wird in Fig. 3 beispielhaft beschrieben.

Fig. 3 zeigt das hochfrequente Sendesignal U5 und den Verlauf der Senderversorgungsspannung U3. Bis zu einem Zeitpunkt T1 hat die Senderversorgungsspannung U3 ihren maximalen Betrag und das hochfrequente Sendesignal U5 schwingt mit seiner maximalen Amplitude mit der von der Treiberausgangsspannung U4 aufgeprägten Frequenz. Zum Zeitpunkt T1 wird die Senderversorgungsspannung U3 bis zu einem Zeitpunkt T2 um einen bestimmten Betrag abgesenkt mit der Folge, dass die Amplitude des Sendesignals U5 für die Dauer zwischen T1 und T2 eine geringere Amplitude aufweist. Durch dieses kurzzeitige Absenken der Senderversorgungsspannung U3 wird somit ein amplitudenmoduliertes Sendesignal U5 erzeugt, dessen Modulationsgrad über den Betrag der Senderversorgungsspannung U3 variiert werden kann.

Fig. 4 stellt eine mögliche Schaltungsvariante der Senderversorgungsspannungsquelle 33 dar, mit der es möglich ist, neben der Sendeleistung auch den Modulationsgrad der Sendevorrichtung zu variieren. Dazu besitzt die Senderversorgungsspannungsquelle 33 zwei variable Gleichspannungsquellen, die Gleichspannungen U31 und U32 erzeugen.

Solange an einem Eingang MOD ein logischer high-Pegel anliegt, ist ein Transistor V4 durchgesteuert und die Gleichspannung U32 wird von der Senderversorgungsspannungsquelle 33 als Senderversorgungsspannung U3 abgegeben. Sobald der Eingang MOD einen logischen low-Pegel annimmt, wird der Transistor V4 gesperrt und ein über einen Inverter D7 angeschlossener Transistor V3 durchgesteuert. Hierdurch wird die Gleichspannung U31 als Senderversorgungsspannung U3 abgegeben.

Die Gleichspannung U32 ist dabei so eingestellt, dass über sie die Amplitude des unmodulierten Sendesignals U5 erzeugt wird. Die Gleichspannung U31 hat gegenüber der Gleichspannung U32 einen geringeren Betrag und ist so eingestellt, dass sie die geringere Amplitude des modulierten Sendesignals U5 erzeugt.

Damit die erfindungsgemäße Sendevorrichtung einen insgesamt hohen Wirkungsgrad erreicht, ist es besonders vorteilhaft, auch die Spannungsquellen der Senderversorgungsspannungsquelle 33 so aufzubauen, dass diese einen hohen Wirkungsgrad erzielt, was beispielsweise durch den Einsatz verlustarmer Schaltregler oder Schaltnetzteile erreicht wird. Ein Schaltregler oder Schaltnetzteil hat zudem den Vorteil, dass ihre Ausgangsspannung leicht variiert werden kann.

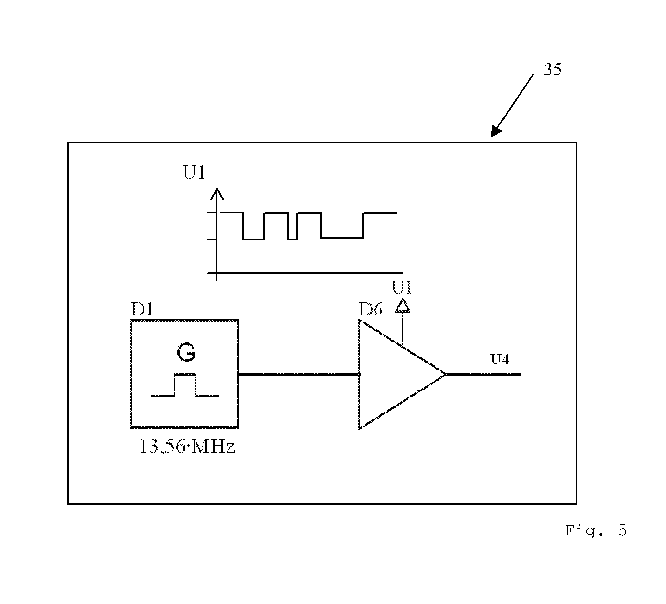

Zum Erzielen hoher Datenübertragungsgeschwindigkeiten muss die Senderversorgungsspannungsquelle 33 in der Lage sein, die notwendige dynamische Änderung der Senderversorgungsspannung U3 sehr schnell durchzuführen, was insbesondere bei höheren Sendeleistungen von beispielsweise mehr als einem Watt einen verhältnismäßig hohen Aufwand an schnellen, leistungsfähigen und teuren Bauteilen zur Folge hätte. Zur Vermeidung dieses hohen Aufwands ist in einer weiteren Ausführungsform vorgesehen, die Modulation des Sendesignals U5 über eine speziell dafür angepasste Treibervorrichtung 35 durchzuführen, die mit geringem schaltungstechnischem Aufwand und preiswerten Bauteilen realisiert werden kann. Von dieser vorteilhaften Treibervorrichtung 35 ist in Fig. 5 eine erste Ausführungsform als Prinzipschaltbild dargestellt.

Wie in Fig. 5 dargestellt, wird über einen Frequenzgenerator D1 ein Generatorsignal U6 mit der Sendefrequenz der Schreib-/Lesestation von beispielsweise 13,56 MHz erzeugt und am Eingang eines Treibers D6 eingespeist, der von einer variablen Treiberversorgungsspannung U1 mit Gleichspannung versorgt wird und die Treiberausgangsspannung U4 abgibt. Die Treiberausgangsspannung U4 weist die vom Frequenzgenerator D1 eingespeiste Frequenz vom Generatorsignal U6 auf, während die Amplitude der Treiberausgangsspannung U4 über den Betrag der Treiberversorgungsspannung U1 variiert werden kann.

Der Grad, um den der Endstufentransistor V1 durchgesteuert wird, ist abhängig von der Amplitude der Treiberausgangsspannung U4. Damit die Sendeendstufe ein Sendesignal U5 mit der vollen Amplitude abgibt, wird die Treiberversorgungsspannung U1 so eingestellt, dass die Treiberausgangsspannung U4 den Endstufentransistor V1 vollständig durchsteuert, solange das Generatorsignal U6 einen high-Pegel hat. Solange der Frequenzgenerator D1 einen low-Pegel generiert, wird der Endstufentransistor V1 gesperrt.

Durch Absenken der Treiberversorgungsspannung U1 kann der Grad, um den der Endstufentransistor V1 durchgesteuert wird und damit die Amplitude des Sendesignals U5 variiert werden. Dieser Zusammenhang zwischen dem Betrag der Treiberversorgungsspannung U1 und der Amplitude von Sendesignal U5 wird erfindungsgemäß genutzt, um ein amplitudenmoduliertes Sendesignal U5 zu erzeugen. Hierzu wird die Treiberversorgungsspannung U1 entsprechend der zu sendenden Daten abgesenkt und wieder auf den ursprünglichen Betrag angehoben.

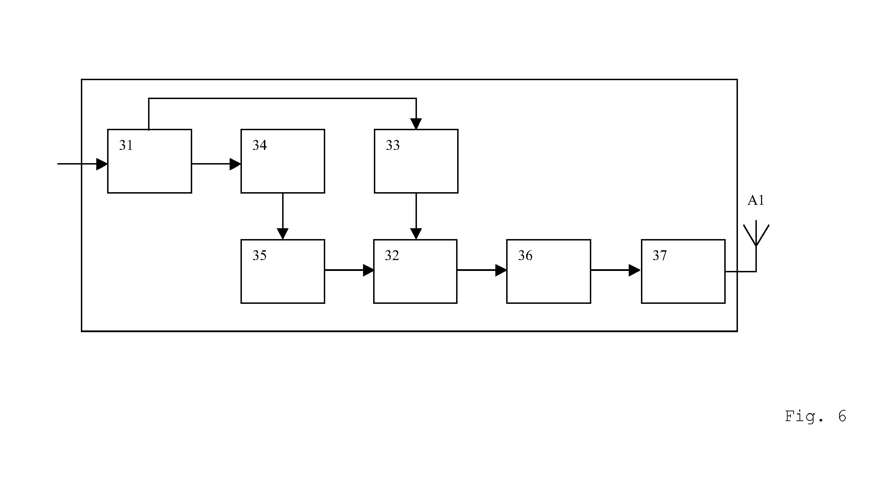

Fig. 6 zeigt das Blockschaltbild eines möglichen Ausführungsbeispieles der erfindungsgemäßen Sendevorrichtung, wenn diese mit der in Fig. 5 dargestellten Ausführungsform der Treibervorrichtung 35 aufgebaut ist. Dabei wirkt die Steuervorrichtung 31 über die Treiberversorgungsspannungsquelle 34 auf die Treibervorrichtung 35 ein, um die Sendedaten zu modulieren, und auf die Senderversorgungsspannungsquelle 33, um die Sendeleistung variieren zu können.

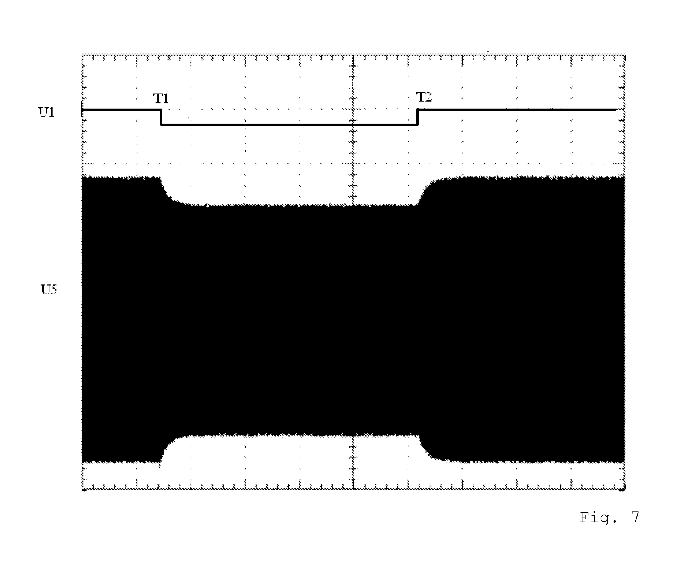

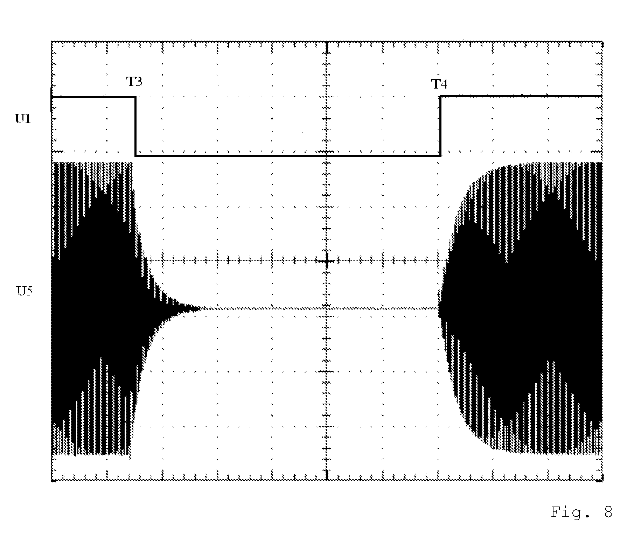

In den Fig. 7 und Fig. 8 wird der Zusammenhang zwischen der Treiberversorgungsspannung U1 und dem Sendesignal U5 graphisch dargestellt.

Fig. 7 zeigt das hochfrequente Sendesignal U5 und den Verlauf der Treiberversorgungsspannung U1. Bis zum Zeitpunkt T1 hat die Treiberversorgungsspannung U1 ihren maximalen Betrag und das hochfrequente Sendesignal U5 schwingt mit seiner maximalen Amplitude mit der vom Generator D1 vorgegebenen Frequenz. Zum Zeitpunkt T1 wird die Treiberversorgungsspannung U1 bis zum Zeitpunkt T2 um einen bestimmten Betrag abgesenkt mit der Folge, dass die Amplitude vom Sendesignal U5 für die Dauer zwischen T1 und T2 eine geringere Amplitude aufweist. Durch kurzzeitiges Absenken der Treiberversorgungsspannung U1 wird somit ein amplitudenmoduliertes Sendesignal U5 erzeugt, dessen Modulationsgrad mit dem Betrag der Treiberversorgungsspannung U1 variiert werden kann. Dies hat zur Folge, dass der Endstufentransistor V1 während der Dauer einer abgesenkten Treiberversorgungsspannung U1 nicht im Schalterbetrieb arbeitet, was zwar eine erhöhte Verlustleistung am nicht ganz durchgesteuerten Endstufentransistor V1 zur Folge hat, die jedoch aufgrund der kurzen Dauer der Modulationspulse und entsprechender Dimensionierung keine schädliche Wirkung auf die Funktion des Endstufentransistors V1 hat und auch den Gesamtwirkungsgrad der Sendevorrichtung nur unwesentlich beeinflusst.

Fig. 8 zeigt ebenfalls das hochfrequente Sendesignal U5 und den Verlauf der Treiberversorgungsspannung U1. Im Unterschied zu Fig. 7 wird hier jedoch die Treiberversorgungsspannung U1 von einem Zeitpunkt T3 bis zu einem Zeitpunkt T4 komplett abgeschaltet, was zur Folge hat, dass das Sendesignal U5 während dieser Zeit vollständig oder zumindest nahezu vollständig erlischt. Dieser Fall stellt eine so genannte 100%-Modulation dar.

Die Zeitspanne zwischen den Zeitpunkten T1 bis T2 beziehungsweise T3 bis T4 kann beispielsweise der Dauer eines zu sendenden Datenbits von wenigen Mikrosekunden entsprechen.

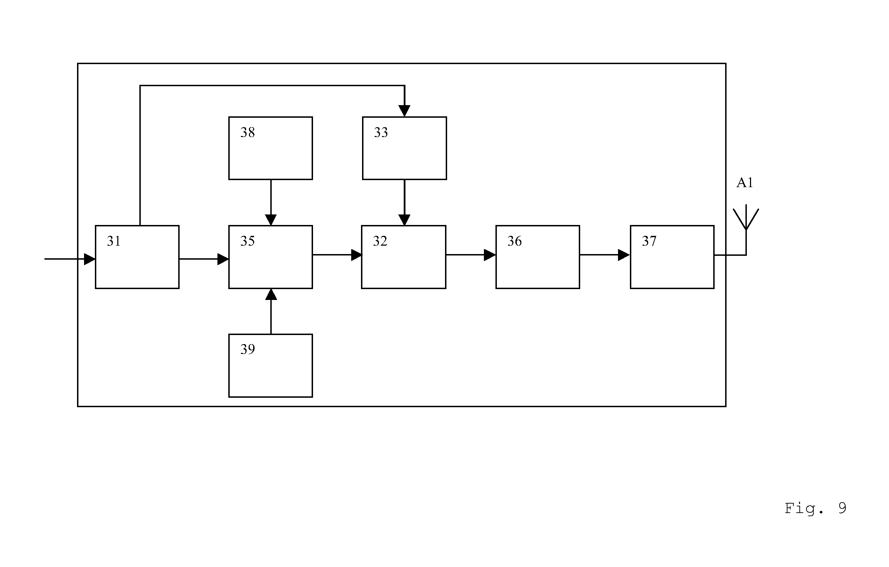

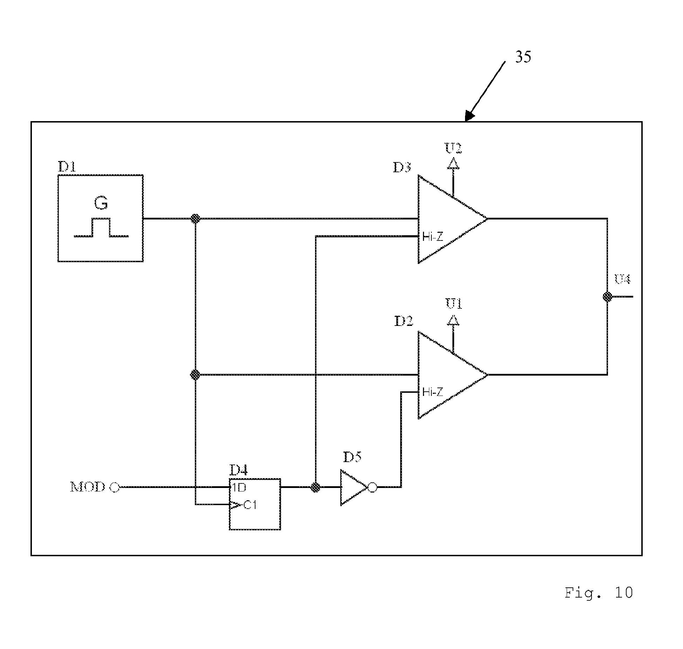

Fig. 9 zeigt ein Blockschaltbild einer weiteren vorteilhaften Ausführungsform der erfindungsgemäßen Sendevorrichtung. Im Unterschied zur ersten Ausführungsform weist hierbei die Treibervorrichtung 35 einen geänderten Aufbau auf, der in Fig. 10 näher beschrieben wird. Ferner wird die Treibervorrichtung 35 von zwei separaten Gleichspannungsquellen 38 und 39 gespeist.

Diese Ausführungsform ist besonders vorteilhaft, weil der schaltungstechnische Aufwand im Vergleich zu einer schnell variierbaren Treiberversorgungsspannungsquelle relativ gering ist und mit preiswerten und gängigen Bauteilen aufgebaut werden kann.

Fig. 10 stellt beispielhaft das Funktionsprinzip der zweiten Ausführungsform der Treibervorrichtung 35 dar. Bei dieser Ausführungsform werden zwei parallel geschaltete Treiber D2 und D3, die mit je einer eigenen Gleichspannung U1 (Treiberversorgungsspannung) und U2 (Modulatorversorgungsspannung) versorgt werden, abwechselnd betrieben. Der Betrag der Modulatorversorgungsspannung U2 ist hierbei kleiner gewählt als der Betrag der Treiberversorgungsspannung U1. Ferner kann der Betrag der Modulatorversorgungsspannung U2 zur Variation des Modulationsgrads des Sendesignals U5 stufenlos variiert werden.

Der Treiber D2 hat die Funktion, die Treiberausgangsspannung U4 für das unmodulierte Sendesignal U5 zu erzeugen, während über den Treiber D3, der von der variablen Modulatorversorgungsspannung U2 versorgt wird, in der Zeitspanne, in der das Sendesignal U5 ein moduliertes Signal sein soll, die Treiberausgangsspannung U4 erzeugt wird.

Damit die beiden parallel geschalteten Treiber D2 und D3 ihr Ausgangssignal abwechselnd und ohne Beeinflussung des jeweils anderen Treibers ausgeben können, kann ihr Ausgang neben den logischen Zuständen high und low auch einen hochohmigen Zustand annehmen, es handelt sich also um so genannte Tri-State-Ausgänge. Der Zeitpunkt und die Dauer des hochohmigen Zustands wird über den Eingang "Hi-Z" der Treiber D2 und D3 gesteuert.

Die in Fig. 10 dargestellte Schaltung besteht zudem aus einem D-Flip-Flop D4 (Gatter) und einem Inverter D5 und stellt beispielhaft eine mögliche Schaltungsvariante dar, die es ermöglicht, dass die Treiber D2 und D3 nur abwechselnd das Treiberausgangssignal U4 erzeugen.

Über den Eingang MOD werden der Treibervorrichtung 35 die zu modulierenden Daten in Form von logischen high- und low-Pegeln zugeführt.

Das D-Flip-Flop D4 hat die Funktion, den Zeitpunkt der Umschaltung zwischen den Treibern D2 und D3 derart zu synchronisieren, dass ein Wechsel zwischen den Treibern D2 und D3 nur in der low-Phase des Generatorsignals U6 erfolgt, um zu gewährleisten, dass die beiden Treiber D2 und D3 nicht gleichzeitig und damit gegeneinander die Treiberausgangsspannung U4 generieren.

Zum Senden des unmodulierten Trägersignals wird an dem Eingang MOD der Treibervorrichtung ein logischer high-Pegel angelegt, wodurch mit der steigenden Flanke vom Generatorsignal U6 der Q-Ausgang des D-Flip-Flops D4 ebenfalls einen high-Pegel annimmt, wodurch der Ausgang des Treibers D3 über seinen Eingang Hi-Z hochohmig geschaltet wird und kein Ausgangssignal ausgibt. Gleichzeitig liegt am Eingang Hi-Z des Treibers D2 ein low-Pegel an, weil das Ausgangssignal des D-Flip-Flops D4 über den Inverter D5 invertiert wurde, was zur Folge hat, dass der Treiber D2 das Generatorsignal U6 durchleitet und die Treiberausgangsspannung U4 erzeugt, wobei die Amplitude der Treiberausgangsspannung U4 über den Betrag der Treiberversorgungsspannung U1 bestimmt wird.

Die Treiberversorgungsspannung U1 ist hierbei so eingestellt, dass der Endstufentransistor V1 von einem logischen high-Pegel der vom Treiber D2 erzeugten Treiberausgangsspannung U4 vollständig durchgesteuert wird, er also im Schalterbetrieb arbeitet.

Wenn am Eingang MOD der Treibervorrichtung ein logischer low-Pegel anliegt, wechselt der Ausgang des D-Flip-Flops D4 mit der ersten steigenden Flanke des Generatorsignals U6 ebenfalls auf den logischen low-Pegel, wodurch der Ausgang des Treibers D3 aktiviert wird und der Treiber D3 das Generatorsignal U6 durchleitet und die Treiberausgangsspannung U4 erzeugt, wobei die Amplitude der Treiberausgangsspannung U4 über den Betrag der Modulatorversorgungsspannung U2 bestimmt wird. Gleichzeitig liegt am Eingang Hi-Z des Treibers D3 ein high-Pegel an, weil das Ausgangssignal des D-Flip-Flops D4 über den Inverter D5 invertiert wurde, was zur Folge hat, dass der Ausgang von Treiber D2 hochohmig geschaltet wird und kein Signal ausgibt.

Die Modulatorversorgungsspannung U2 ist so eingestellt, dass der Endstufentransistor V1 von einem logischen high-Pegel der vom Treiber D3 erzeugten Treiberausgangsspannung U4 nur teilweise durchgesteuert wird, wodurch sich ein geringeres Sendesignal U5 einstellt, solange am Eingang MOD ein logischer low-Pegel anliegt. Durch Variieren der Modulatorversorgungsspannung U2 kann der Grad, um den der Endstufentransistor V1 durchgesteuert wird, stufenlos variiert werden, womit eine stufenlose Variation des Modulationsgrades der Sendevorrichtung erzielt wird.

Der Vorteil dieser zweiten Ausführungsform gegenüber der in Fig. 1 beschriebenen Ausführungsform ist, dass insbesondere die Treiberversorgungsspannung U1 sehr gut stabilisiert und gesiebt werden kann und damit sehr rauscharm und brummarm ist, womit keine störenden Rauscheinflüsse über den Endstufentransistor V1 verstärkt und in den nicht dargestellten Empfänger der Schreib-/Lesestation einwirken können. Ferner ist der schaltungstechnische Aufwand zur Erzeugung von zwei unterschiedlich hohen Gleichspannungen gering, und es werden nur die sehr preiswerten Standardbauteile D-Flip-Flop D4, Inverter D5 und Treiber D2 und D3 benötigt.

Damit durch das Umschalten zwischen den Treibern D2 und D3 kein umschaltbedingtes Überschwingen des Sendesignals U5 hervorgerufen wird, ist es in einer weiteren vorteilhaften Ausführungsform vorgesehen, die Modulatorversorgungsspannung U2 nach der Umschaltung vom Treiber D3 auf Treiber D2 sanft von einem Betrag im Bereich der Treiberversorgungsspannung U1 auf den Endbetrag der Modulatorversorgungsspannung U2 abfallen zu lassen beziehungsweise vor dem Umschalten von dem Treiber D2 auf den Treiber D3 die Modulatorversorgungsspannung sanft auf einen Betrag im Bereich der Treiberversorgungsspannung U1 anzuheben.

In einer weiteren Ausführungsform (nicht dargestellt) ist der Frequenzgenerator D1 und die Vorrichtung zum Erzeugen des Signals MOD Bestandteil eines komplexen integrierten elektronischen Schaltkreises (IC), wie beispielsweise eines Mikroprozessors oder einer programmierbaren Logikschaltung, womit auf die externen Bauteile D-Flip-Flop D4 und Inverter D5 verzichtet werden kann, da die Festlegung des Umschaltzeitpunkts zwischen dem Treiber D2 und D3 direkt innerhalb des ICs erfolgt (nicht dargestellt).

Auch die zusätzliche Integration der Treiber D2 und D3 in den IC ist in einer weiteren erfindungsgemäßen Ausführungsform vorgesehen (nicht dargestellt).

In einer weiteren besonders vorteilhaften Ausführungsform ist zusätzlich die Integration des Endstufentransistors V1 in den IC vorgesehen (nicht dargestellt). Bezugszeichen
- A1: Antenne
- C1: Kapazität
- C2: Kapazität
- D1: Frequenzgenerator
- D2: Treiber für Träger
- D3: Treiber für Modulation
- D4: D-Flip-Flop
- D5: Inverter
- D6: Treiber
- D7: Inverter
- Hi-Z: Eingang des Treibers D3
- L1: Induktivität
- L2: Induktivität
- MOD: Eingang
- T1: Zeitpunkt
- T2: Zeitpunkt
- T3: Zeitpunkt
- T4: Zeitpunkt
- U1: Treiberversorgungsspannung
- U2: Modulatorversorgungsspannung
- U3: Senderversorgungsspannung
- U31: Gleichspannung
- U32: Gleichspannung
- U4: Treiberausgangsspannung
- U5: Sendesignal
- U6: Generatorsignal
- V1: Endstufentransistor
- V3: Transistor
- V4: Transistor
- 31: Steuervorrichtung
- 32: Sendeendstufe
- 33: Senderversorgungsspannungsquelle
- 34: Treiberversorgungsspannungsquelle
- 35: Treibervorrichtung
- 36: Impedanztransformator
- 37: Tiefpassfilter
- 38: Gleichspannungsquelle
- 39: Gleichspannungsquelle

## Patentansprüche

1. Rauscharme Sendevorrichtung mit hohem Wirkungsgrad und variabler Sendeleistung für eine Schreib-/Lesestation eines RFID-Systems bestehend aus einer Sendeendstufe, die als E-Endstufe aufgebaut ist, und einer Ansteuervorrichtung der Sendeendstufe,
**dadurch gekennzeichnet, dass**
- eine Sendeleistung der Sendeendstufe (32) durch Variieren einer Senderversorgungsspannung (U3) variierbar ist und/oder
- ein Modulationsgrad eines Sendesignals (U5) durch Variieren einer Versorgungsspannung variierbar ist.

2. Sendevorrichtung nach Anspruch 1, **dadurch gekennzeichnet, dass** eine Modulation durch Modulieren der Senderversorgungsspannung (U3) durchführbar ist.

3. Sendevorrichtung nach Anspruch 2, **dadurch gekennzeichnet, dass** der Modulationsgrad des Sendesignals (U5) durch Variieren der Senderversorgungsspannung (U3) variierbar ist.

4. Sendevorrichtung nach Anspruch 3, **dadurch gekennzeichnet, dass** eine Senderversorgungsspannungsquelle (33) als eine von zwei Gleichspannungen (U31 und U32) gespeiste Senderversorgungsspannungsquelle (33) ausgebildet ist, wobei die Gleichspannungen (U31 und U32) einen unterschiedlichen Betrag aufweisen, und wobei die Gleichspannung mit dem höheren Betrag die Amplitude des unmodulierten Sendesignals (U5) bestimmt, und die Gleichspannung mit dem geringeren Betrag die Amplitude des modulierten Sendesignals (U5) bestimmt, und innerhalb der Senderversorgungsspannungsquelle (33) in Abhängigkeit der zu modulierenden Signale eine Umschaltung zwischen den beiden Gleichspannungen (U31 und U32) durchführbar ist.

5. Sendevorrichtung nach Anspruch 1, **dadurch gekennzeichnet, dass** eine Modulation durch Modulieren einer Treiberausgangsspannung (U4) durchführbar ist.

6. Sendevorrichtung nach Anspruch 5, **dadurch gekennzeichnet, dass** die Modulation der Treiberausgangsspannung (U4) durch Variieren der Treiberversorgungsspannung (U1) oder durch Umschaltung zwischen der Treiberversorgungsspannung (U1) und einer Modulationsversorgungsspannung (U2) durchführbar ist.

7. Sendevorrichtung nach Anspruch 6, **dadurch gekennzeichnet, dass** der Modulationsgrad durch Variieren der Treiberversorgungsspannung (U1) oder durch Variieren der Modulationsversorgungsspannung (U2) variierbar ist.

8. Sendevorrichtung nach einem der vorhergehenden Ansprüche, **dadurch gekennzeichnet, dass** die Senderversorgungsspannung (U3) von einem Schaltnetzteil oder mittels eines Schaltreglers erzeugbar ist.
